# EUROPEAN PATENT APPLICATION

(11) **EP 3 034 891 A1**
(43) Date of publication of application: **22.06.2016**
(21) Application number: 15200609.4
(22) Date of filing: 16.12.2015
(51) Int. Cl.: F16B 5/02, F16B 33/00, F16B 1/00

(54) **CERAMIC BOLT FOR EXHAUST PANEL**

(30) Priority: 16.12.2014 US 201462092611 P
(71) Applicant: United Technologies Corporation, Hartford, CT 06101 (US)
(72) Inventor: Peters, Donald W., Colchester, CT Connecticut 06415 (US); Martinez, Jr., Gonzalo F., Stuart, FL Florida 34997 (US)
(74) Representative: Gittins, Alex Michael

(57) **Abstract**

Aspects of the disclosure are directed to a bolt assembly (208; 308; 408; 508; 608) comprising: a ceramic fastener (320; 420; 520; 620), and metal threads (322; 422; 522; 622) coupled to the ceramic fastener (320; 420; 520; 620). Aspects of the disclosure are directed to a system comprising: a panel (202) configured to provide thermal insulation, and a bolt assembly (208; 308; 408; 508; 608) coupled to the panel (202), the bolt assembly (208; 308; 408; 508; 608) comprising: a ceramic fastener (320; 420; 520; 620), and metal threads (322; 422; 522; 622) coupled to the ceramic fastener (320; 420; 520; 620).

## Description

### BACKGROUND

In aircraft environments, one or more panels may be used to provide insulation. For example, a ceramic panel may be used as a thermal insulator in connection with one or more exhaust systems, such as engine exhaust systems.

Attaching or removing the ceramic panels can be difficult. For example, a room temperature vulcanizing (RTV) glue or sealant may be used as an attachment mechanism. These attachment mechanisms tend to become brittle over time and (elevated) temperature exposure, or alternatively, expensive cooling air is used to maintain a low temperature.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure are directed to a bolt assembly comprising: a ceramic fastener, and metal threads coupled to the ceramic fastener. In some embodiments, the threads are coupled to the fastener by casting or molding the threads onto the fastener. In some embodiments, the threads are coupled to the fastener by crimping a sleeve of metal onto the fastener. In some embodiments, the threads are coupled to the fastener by brazing the threads onto the fastener. In some embodiments, the fastener comprises a mechanical feature configured to capture the threads. In some embodiments, the mechanical feature is substantially bulb-shaped. In some embodiments, the ceramic fastener comprises silicon nitride. In some embodiments, brazing is used to attach the metal threads to the fastener.

Aspects of the disclosure are directed to a system comprising: a panel configured to provide thermal insulation, and a bolt assembly coupled to the panel, the bolt assembly comprising: a ceramic fastener, and metal threads coupled to the ceramic fastener. In some embodiments, the panel includes a ceramic matrix composite. In some embodiments, the panel includes at least one slot configured to seat the bolt assembly. In some embodiments, the at least one slot is located on a side of the panel corresponding to a flow path associated with an engine. In some embodiments, the at least one slot includes a female nut configured to mate with the threads. In some embodiments, at least one of the panel or the bolt includes a coating. In some embodiments, the panel is coupled to an exhaust system of an engine.

### BRIEF DESCRIPTION OF THE DRAWINGS

The present disclosure is illustrated by way of example and not limited in the accompanying figures in which like reference numerals indicate similar elements.
FIG. 1 illustrates a gas turbine engine.
FIG. 2 illustrates a panel associated with an engine, e.g., the engine of FIG. 1.
FIGS. 3-5 illustrate ceramic fasteners with threads coupled to the fasteners.
FIG. 6 illustrates a ceramic fastener.

### DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

In accordance with various aspects of the disclosure, apparatuses, systems and methods are described for providing a bolt for an exhaust panel. In some embodiments, a fastener or panel may be removed from a gas-path side associated with an engine or related exhaust system, with the engine or exhaust system still being installed/present on an aircraft. In some embodiments, the fastener may be ceramic and tolerant of elevated temperatures (relative to a threshold). The fastener may be non-metallic, allowing the thermal growth of the fastener to closely match the panel.

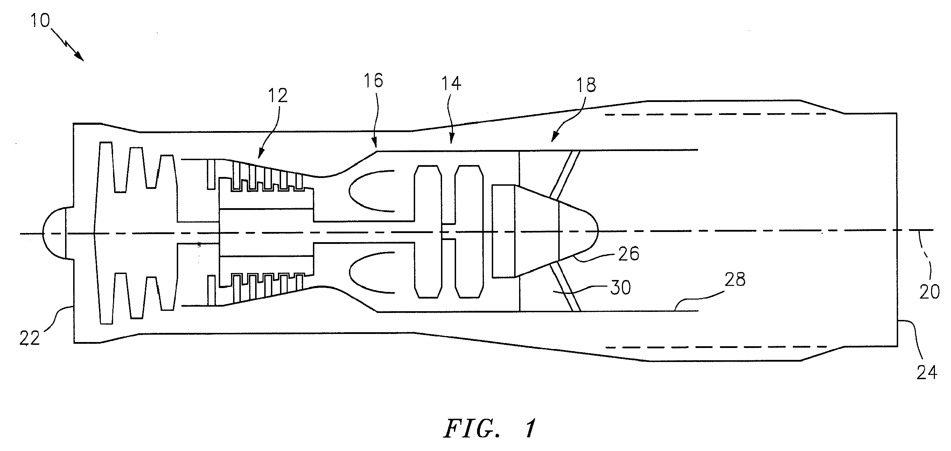

Aspects of the disclosure may be applied in connection with a gas turbine engine. For example, FIG. 1 is a side-sectional illustration of a gas turbine engine 10. The engine 10 includes a compressor section 12, a turbine section 14 and one or more engine hot sections. The engine hot sections may include, for example, a first engine hot section 16 configured as a combustor section and a second engine hot section 18 configured as an augmentor section. The compressor section 12, the first engine hot section 16, the turbine section 14 and the second engine hot section 18 may be sequentially aligned along an axial centerline 20 between a forward engine airflow inlet 22 and an aft engine airflow exhaust 24.

FIG. 1 represents one possible configuration for an engine 10. Aspects of the disclosure may be applied in connection with other engine configurations.

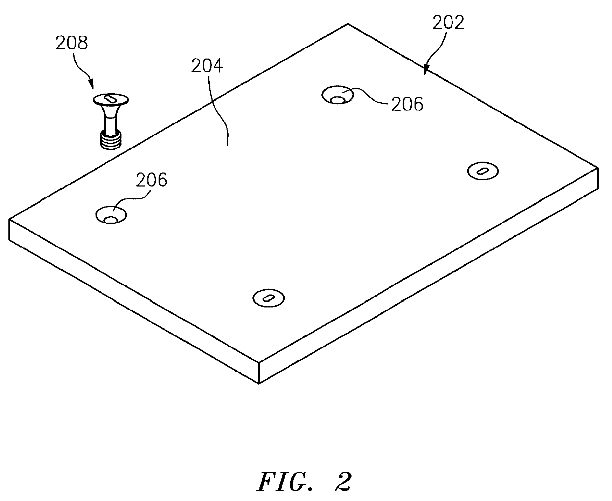

Referring to FIG. 2, a panel 202 in accordance with one or more embodiments is shown. In some embodiments, the panel 202 may be approximately one to two square feet (or approximately 929 square centimeters to 1858 square centimeters). The panel 202 may provide for thermal insulation in connection with an exhaust system of an engine (e.g., the engine 10 of FIG. 1). The panel 202 may be made of one or more materials. For example, a ceramic insulation (e.g., a ceramic matrix composite (CMC)) may be used. The panel 202 may be used to provide insulation (e.g., thermal insulation). Reference character 204 indicates a side/surface associated with the panel 202 with respect to a flow path associated with an engine (e.g., the engine 10 of FIG. 1).

The panel 202 may be fabricated/manufactured to include one or more holes/slots 206. The holes/slots 206 may accommodate/seat one or more bolt assemblies 208. The bolt assemblies 208 may be used to couple (e.g., attach) the panel 202 to another structure, such as a portion of an exhaust system. The inclusion of the holes/slots 206 and the bolt assemblies 208 on the flow path side/surface 204 may provide ease of accessibility. For example, the panel 202 may be serviced (e.g., replaced) without having to remove an engine (e.g., engine 10), or any other hardware from the engine.

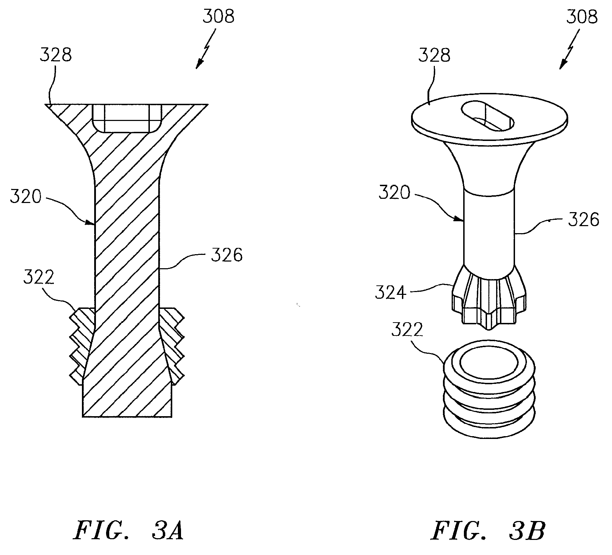

Referring to FIGS. 3A-3B (collectively referred to as FIG. 3), a bolt assembly 308 is shown. The bolt assembly 308 may correspond to the bolt assembly 208 of FIG. 2.

The bolt assembly 308 may include a fastener 320. The fastener 320 may be a ceramic, such as silicon nitride.

The bolt assembly 308 may include one or more threads 322. The threads 322 may include metal threads. The threads 322 may be casted/molded on to the fastener 320, potentially with an alloy that has a relatively low melting point. In some embodiments, a sleeve of metal may be placed over the fastener 320 following by a crimping of the metal sleeve onto the fastener 320. In some embodiments, the threads 322 may be brazed onto the fastener 320.

The fastener 320 may include one or more mechanical features 324 to physically capture the threads 322. As shown in FIG. 3B, the mechanical features 324 may project/flare radially outward from a base 326 of the fastener 320 towards a first distal end of the fastener 320/base 326. The mechanical features 324 may carry the torque of tightening and loosening the fastener 320. The mechanical features 324 may carry the preload or load along an axis of the fastener 320. Similarly, a head 328 of the fastener 320 may flare outward, relative to the base 326, towards a second distal end of the fastener 320/base 326

In some embodiments, the panel 202 (e.g., a hole/slot 206) of FIG. 2 may include a female nut/metal back-structure (not shown). The female nut may be oval in shape and may be configured to couple to, or mate with, the threads 322. The coupling may be used to provide a self-locking or low-torque feature, withstanding vibration between, e.g., the bolt assembly 308 and the panel 202 without having to tighten the bolt assembly 308/fastener 320 to any great extent. One or more coatings may be used in connection with the bolt assembly 308 or the panel 202 to provide for such features.

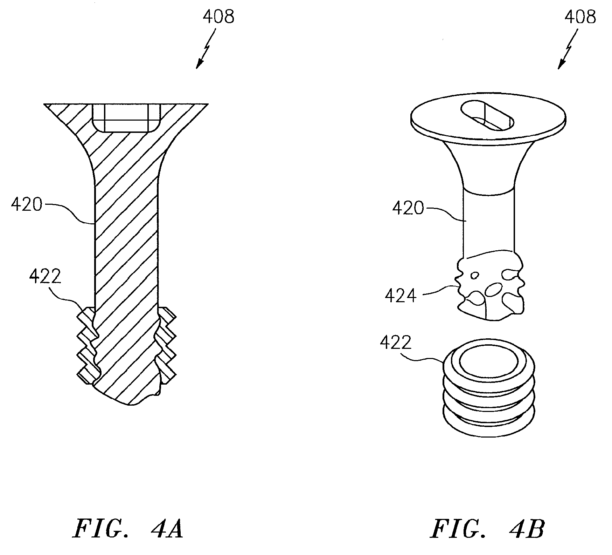

Referring to FIGS. 4A-4B (collectively referred to as FIG. 4), a bolt assembly 408 is shown. The bolt assembly 408 may correspond to the bolt assembly 208 of FIG. 2.

The bolt assembly 408 may include a fastener 420. The fastener 420 may be substantially similar to the fastener 320 of FIG. 3, with a potential difference being the mechanical features 424 that are used.

The bolt assembly 408 may include one or more threads 422. The threads 422 may be substantially similar to, or correspond to, the threads 322 of FIG. 3.

The fastener 420 may include one or more mechanical features 424 to capture the threads 422. The mechanical features 424 may be substantially similar to, or correspond to, the mechanical features 324 of FIG. 3. However, a profile of the mechanical features 424 may be different from a profile of the mechanical features 324.

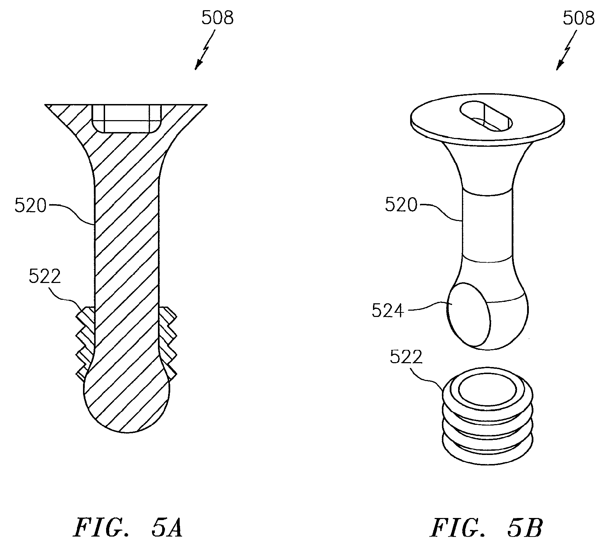

Referring to FIGS. 5A-5B (collectively referred to as FIG. 5), a bolt assembly 508 is shown. The bolt assembly 508 may correspond to the bolt assembly 208 of FIG. 2.

The bolt assembly 508 may include a fastener 520. The fastener 520 may be substantially similar to the fastener 320 of FIG. 3 or the fastener 420 of FIG. 4, with a potential difference being the mechanical features 524 that are used.

The bolt assembly 508 may include one or more threads 522. The threads 522 may be substantially similar to, or correspond to, the threads 322 of FIG. 3 or the threads 422 of FIG. 4.

The bolt assembly 508 may include a substantially bulb-shaped mechanical feature 524 that may be used to attach the threads 522, such as via the casting described above. Also as shown in FIGS. 5A-5B, the fastener 520/mechanical features 524 may be formed with a smooth profile/surface, which can be useful from the perspective of being able to handle large loads without fracture/cracking.

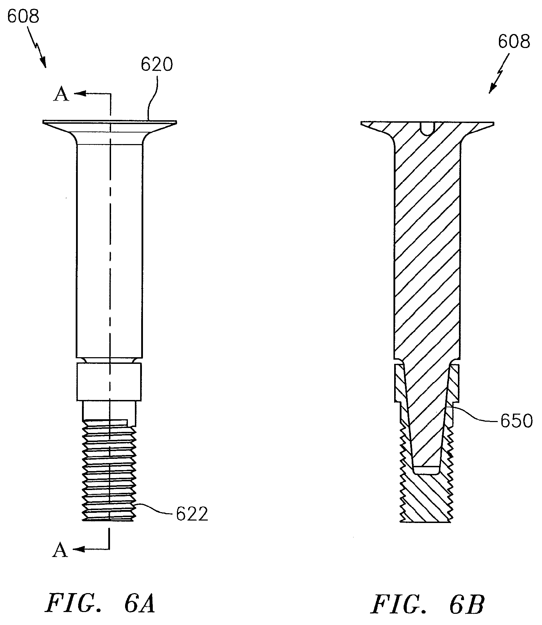

FIGS. 6A-6B (collectively referred to as FIG. 6), a bolt assembly 608 is shown. The bolt assembly 608 may correspond to the bolt assembly 208 of FIG. 2.

The bolt assembly 608 includes a ceramic 620 (e.g., a ceramic shank) coupled to metal 622 (e.g., metal threads). Brazing in an area proximate to the reference character 650 may be conducted to form the bolt assembly 608, e.g., to attach the metal 622 to the ceramic 620.

Technical effects and benefits include the design and fabrication of one or more fasteners (e.g., bolts or bolt assemblies) that can be used in an environment characterized by elevated temperatures.

Aspects of the disclosure have been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure.

## Claims

1. A bolt assembly comprising:
a ceramic fastener (320; 420; 520; 620); and
metal threads (322; 422; 522; 622) coupled to the ceramic fastener (320; 420; 520; 620).

2. The bolt assembly of claim 1, wherein the threads (322; 422; 522; 622) are coupled to the fastener (320; 420; 520; 620) by casting or molding the threads (322; 422; 522; 622) onto the fastener (320; 420; 520; 620).

3. The bolt assembly of claim 1, wherein the threads (322; 422; 522; 622) are coupled to the fastener (320; 420; 520; 620) by crimping a sleeve of metal onto the fastener (320; 420; 520; 620).

4. The bolt assembly of claim 1, wherein the threads (322; 422; 522; 622) are coupled to the fastener (320; 420; 520; 620) by brazing the threads (322; 422; 522; 622) onto the fastener (320; 420; 520; 620).

5. The bolt assembly of claim 1, 2 or 3, wherein the fastener (320; 420; 520; 620) comprises a mechanical feature (324; 424; 524) configured to capture the threads (322; 422; 522; 622).

6. The bolt assembly of claim 5, wherein the mechanical feature (324; 424; 524) is substantially bulb-shaped.

7. The bolt assembly of any preceding claim, wherein the ceramic fastener (320; 420; 520; 620) comprises silicon nitride.

8. The bolt assembly of any preceding claim, wherein brazing is used to attach the metal threads (322; 422; 522; 622) to the fastener (320; 420; 520; 620).

9. A system comprising:
a panel (202) configured to provide thermal insulation; and
a bolt assembly (208; 308; 408; 508; 608) as claimed in any preceding claim and coupled to the panel.

10. The system of claim 9, wherein the panel (202) includes a ceramic matrix composite.

11. The system of claim 9 or 10, wherein the panel (202) includes at least one slot (206) configured to seat the bolt assembly.

12. The system of claim 11, wherein the at least one slot (206) is located on a side of the panel (202) corresponding to a flow path associated with an engine.

13. The system of claim 11 or 12, wherein the at least one slot (206) includes a female nut configured to mate with the threads (322; 422; 522; 622).

14. The system of any of claims 9-13, wherein at least one of the panel (202) or the bolt or bolt assembly (208; 308; 408; 508; 608) includes a coating.

15. The system of any of claims 9-14, wherein the panel (202) is coupled to an exhaust system of an engine (10).
